Europäisches Patentamt

(19) European Patent Office

Office européen des brevets

(11) Veröffentlichungsnummer: **0 259 409 B1**

(12) # EUROPÄISCHE PATENTSCHRIFT

(45) Veröffentlichungstag der Patentschrift :
02.05.91 Patentblatt 91/18

(51) Int. Cl.$^5$: **B23Q 5/04**, B23C 3/28

(21) Anmeldenummer : 87901458.7

(22) Anmeldetag : 24.02.87

(86) Internationale Anmeldenummer :
PCT/EP87/00102

(87) Internationale Veröffentlichungsnummer :
WO 87/04959 27.08.87 Gazette 87/19

(54) ZUM NUTENFRÄSEN VERSTELLBARER WERKZEUGHALTER AN WERKZEUGMASCHINEN.

(30) Priorität : 24.02.86 DE 3605913

(43) Veröffentlichungstag der Anmeldung :
16.03.88 Patentblatt 88/11

(45) Bekanntmachung des Hinweises auf die
Patenterteilung :
02.05.91 Patentblatt 91/18

(84) Benannte Vertragsstaaten :
CH DE FR GB LI SE

(56) Entgegenhaltungen :
DE-C- 239 253
FR-A- 660 745
FR-A- 2 481 169
GB-A- 944 557
US-A- 1 365 536
US-A- 1 628 975
US-A- 2 219 717
US-A- 2 915 949

(73) Patentinhaber : Boehringer
Werkzeugmaschinen GmbH
Stuttgarter Strasse 50 Postfach 220
W-7320 Göppingen (DE)

(72) Erfinder : HORSKY, Anton
Hauptstr. 24
W-7321 Wangen (DE)
Erfinder : KUHN, Siegfried
Gammelshauserstr. 8
W-7321 Dürnau (DE)
Erfinder : VOSS, Wolf-Dietrich
Erlengrund 10
W-7325 Boll (DE)

(74) Vertreter : Vogeser, Werner, Dipl.-Ing. et al
Patentanwälte Hansmann & Vogeser
Albert-Rosshaupter-Strasse 65
W-8000 München 70 (DE)

Jouve, 18, rue Saint-Denis, 75001 PARIS

## Beschreibung

Die Erfindung betrifft einen angetriebenen Fräs-Werkzeugkopf nach dem Oberbegriff des Anspruches 1.

Derartige angetriebene Fräs-Werkzeugköpfe werden heute üblicherweise in die Werkzeughalterungen universell einsetzbarer Werkzeugmaschinen und insbesondere in die Werkzeugrevolver von NC-Drehmaschinen eingesetzt, um am stehenden oder drehenden Werkstück Bohr- und Fräsbearbeitungen vornehmen zu können, wie etwa Ölzulaufbohrungen oder axial bzw. radial verlaufende Paßfedernuten. Derartige Drehmaschinen verfügen üblicherweise nur über einen Längsund einen Querschlitten, also eine erste und eine zweite Bewegungsrichtung für das Werkzeug.

Um mit einer solchen Anordnung beispielsweise eine axial verlaufende Nut am in der Drehmaschine eingespannten, stehenden Werkstück zu fräsen, bestehen bisher verschiedene Möglichkeiten :

Die erste Möglichkeit besteht darin, daß die axial verlaufende Nut seitlich am Werkstück, d.h. in der Höhe der Längsachse des Werkzeuges, von einem sich radial erstrekkenden Fingerfräser gefertigt wird. Die Tiefe der Nut wird dabei mit Hilfe des Quersupportes zugestellt, während die Länge der Nut durch Verfahren des Werkzeuges entlang dem Längssupport erzeugt wird. Die Breite der Nut dagegen bestimmt sich ausschließlich nach dem Durchmesser des Fingerfräsers, woraus sich der Nachteil ergibt, daß eine vorgegebene Toleranz für die Nutbreite bei Verschleiß des Fräsers nur durch ein Auswechseln des Fräsers gegen ein neues Werkzeug eingehalten werden kann. Eine Nachstellmöglichkeit für den verschlissenen Fräser besteht nicht. Dementsprechend müssen bei einer Serienfertigung sehr viele Fräser bereitgestellt und oft ein Werkzeugwechsel vorgenommen werden, wobei dann auch die normale Standzeit der Fräser, abhängig von den vorgegebenen Toleranzen für die Nutbreite, nicht ausgenutzt werden kann. Dies bedingt relativ hohe Herstellungskosten durch den hohen Anteil an Werkzeugwechselzeiten und die nur teilweise Ausnutzung der theoretisch möglichen Werkzeugstandzeiten.

Die zweite Möglichkeit besteht darin, daß die beiden Seitenflanken der axial verlaufenden Nut jeweils von zwei Fräsern, die auf verschiedenen Werkzeughaltern montiert sind, hergestellt werden. Da jeweils nur eine Flanke von jedem Fräser bearbeitet wird, kann die gewünschte Maßhaltigkeit der Nutbreite durch Nachstellen der beiden Fräser bei Verschleiß erreicht werden, und dies ist nicht vom Durchmesser der einzelnen Fräser abhängig. Das eine Fräswerkzeug wird also knapp über, das andere knapp unter der Höhe der Werkzeuglängsachse eingesetzt. Der Nachteil dieser Lösung besteht darin, daß für die beiden Fräser zwei getrennte, angetriebene Werkzeugköpfe benötigt werden, so daß auf dem Werkzeugrevolver eine zusätzliche Werkzeugaufnahme gegenüber der ersten Lösung benötigt wird.

Die dritte Lösung besteht darin, daß mit einem Fräser, wie bei der ersten Lösung, gearbeitet wird, dieser Fräser jedoch einen Durchmesser aufweist, der geringer ist als die Breite der herzustellenden Nut. Die beiden Flanken werden also von dem selben Fräser in zwei verschiedenen Arbeitsgängen hergestellt. Die dazu benötigte Höhenverstellung des Werkzeuges bei der beschriebenen Anordnung des Werkstückes erfordert also eine Verstellung des Fräsers in einer dritten Bewegungsrichtung, die auf den Bewegungsrichtungen des Längs- und Quersupportes senkrecht steht. Dies wurde bisher dadurch realisiert, daß ein dritter Schlitten eine Verfahrbarkeit des Werkzeugs senkrecht zum Längs- und Quersupport ermöglichte. Ein solcher zusätzlicher, dritter Support bedeutet jedoch einen relativ umfangreichen und teueren Ausbau der Drehmaschine, da von einem solchen zusätzlichen Support die ganze Werkzeugaufnahme, d.h. im Falle einer NC-Drehmaschine der ganze Werkzeugrevolver, getragen werden muß. Ein derartiger technischer Aufwand dürfte sich normalerweise zur Vermeidung der Nachteile der zuerst dargestellten ·Lösung in wirtschaftlicher Hinsicht nicht lohnen.

Zum Herstellen von Nuten, die nur geringfügig breiter sind als der verwendete Fräser, genügt jedoch eine geringe Verstellung des Werkzeugkopfes in der dritten, nicht durch Längs- und Quersupport abgedeckten, Bewegungsrichtung. So zeigen die US-A-2 915 949 und gemäß dem Oberbegriff des Anspruches 1 die FR-A-24 81 169 angetriebene Werkzeugköpfe zum Einsetzen in Werkzeugmaschinen, bei denen das anzutreibende Werkzeug innerhalb des Werkzeugkopfes um eine beschränkte Strecke exzentrisch in der dritten Bewegungsrichtung verlagert werden kann, um besagtes Problem zu lösen. Der das Werkzeug tragende Teil des Werkzeugkopfes wird dabei mit Hilfe von Einstellschrauben in seine außermittige Lage gebracht. Der Antriebs des Fräswerkzeuges erfolgt über ein Planetengetriebe.

Für den genannten Einsatzzweck ist jedoch eine kontinuierliche Verstellbarkeit des Fräswerkzeuges in der dritten Bewegungsrichtung nicht notwendig, sondern es ist ausreichend, wenn das Fräswerkzeug in den beiden Extremstellungen dieser Bewegungsrichtung und evtl. zusätzlich in einer Mittelstellung zwischen diesen beiden Extremstellungen justierbar ist.

Der Erfindung liegt daher die Aufgabe zugrunde, einen angetriebenen Fräs-Werkzeugkopf zu schaffen, bei dem eine Verstellung des Fräswerkzeuges in der dritten Bewegungsrichtung, also senkrecht stehend auf den ersten beiden Bewegungsrichtungen des Längs- und Quersuppportes gegeben ist, die die Herstellung von Nuten mit einer Breite größer als der Durchmesser des Fräswerkzeuges ermöglicht.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Der Vorteil dieser Lösung besteht darin, daß dadurch keine kontinuierliche Justierbarkeit in jedem Punkt, sondern lediglich in zwei bzw. drei festen Positionen notwendig ist, was einen wesentlich geringeren konstruktiven Aufwand erfordert.

Die konstruktive Möglichkeit besteht darin, das Werkzeug in einer exzentrischen Werkzeughalterung zu befestigen, und durch Verdrehen dieses Exzenters eine Bewegung des Werkzeuges zu erreichen, die ebenfalls wiederum Bewegungskomponenten in der dritten, auf den Bewegungsrichtungen von Längs- und Quersupport senkrechten Bewegungsrichtung, enthält. Auch hier ist wiederum, je nach Größe der Exzentrizität der Werkzeugaufnahme, nur eine geringe Drehung des Exzenters notwendig, um den beabsichtigten Versatz des Fräsers in der dritten Bewegungsrichtung zu erzielen. Die Verdrehung des Exzenters erfolgt durch die tangentiale Verschiebung einer Nase, die in eine Nut am Umfang des Exzenters hineinragt. Die Nase wiederum ist fest mit einem Schieber verbunden, der ein Langloch aufweist, dessen Längsachse senkrecht zur Verschieberichtung der Nase und parallel zur Drehachse des Exzenters verläuft. In dieses Langloch ragt ein exzentrisch an der Stirnseite eines Bolzens sitzender, axial verlaufender Zapfen hinein, so daß eine Drehung des Bolzens um 180° den Zapfen das Langloch von einem Ende zum anderen Ende und wieder zurück durchlaufen läßt, unter gleichzeitiger Längsbewegung des Schiebers und damit der Nase um die doppelte Exzentrizität des Zapfens bezüglich der Bolzenmitte. Dadurch, daß zwischen den beiden Extremstellungen des Zapfens eine Bolzendrehung von genau 180° liegt, ist die gesamte Anordnung zumindest in ihren Extrempunkten, z.B. bei entsprechender Passung des Schiebers auch über den gesamten Schwenkbereich, selbsthemmend. Der den Zapfen tragende Bolzen kann in dem hohlen Aufnahmeschacht befestigt werden, in dem der ganze Werkzeugträger beispielsweise im Werkzeugrevolver befestigt ist, so daß eine automatische Verstellung des Exzenters und damit des Werkzeuges vom Werkzeugrevolver her über eine Drehung des Bolzens möglich ist.

Diese Ausführungsform ist anhand der Zeichnungen im folgenden beispielhaft näher beschrieben. Es zeigt:

Fig. 1 einen Schnitt der Ausführungsform des Werkzeugträgers mit exzentrischer Werkzeugaufnahme,

Fig. 2 einen Teilschnitt durch den Werkzeugträger entlang der Linie E-F der Fig. 1,

Fig. 3 einen Teilschnitt durch den Werkzeugträger entlang der Linie C-D der Fig. 1, und

Fig. 4 einen Schnitt durch den Werkzeugträger entlang der Linie A-B der Fig. 1.

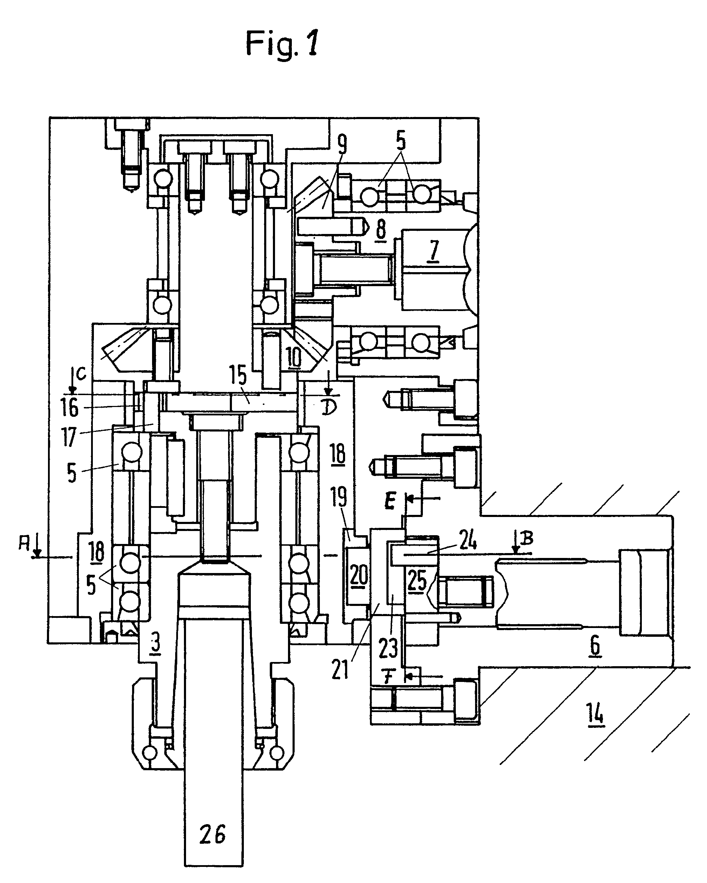

Fig. 1 zeigt einen Querschnitt durch einen angetriebenen Werkzeugkopf, der mit dem Schaft 6 in einer entsprechenden Aufnahme z.B. eines Werkzeugrevolvers 14 befestigt ist. Die Werkzeugaufnahme 3 des Fräs-Werkzeugkopfes ist exzentrisch gestaltet. Dies bietet auch einen Vorteil hinsichtlich einer kompakten Baugröße. Der Antrieb des Werkzeugkopfes erfolgt über den Innenvierkant 7 der Hülse 8, an der wiederum ein Kegelrad 9 befestigt ist, das ein weiteres Kegelrad 10 antreibt, welches in etwa koaxial zur Werkzeugaufnahme 3 angeordnet ist. Da jedoch die Werkzeugaufnahme 3 zur Realisierung der Bewegung des Werkzeuges in der gewünschten Richtung exzentrisch gelagert und verdrehbar ist, ergibt sich zwischen der Drehachse des Kegelrades 10 und der jeweiligen Drehachse der Werkzeugaufnahme 3 ein sich ändernder Achsversatz, der durch ein Kardangelenk ausgeglichen wird, das durch die Pendelscheibe 15 realisiert ist, in die jeweils vom Kegelrad 10 und von der Werkzeugaufnahme 3 her zwei mit Überwurfbuchsen 16 versehene Übertragungsstifte 17 hineinragen. Sowohl die Kegelräder 9 und 10 als auch die Werkzeugaufnahme 3 stützen sich über Läger 5 im Gehäuse des Werkzeugkopfes ab.

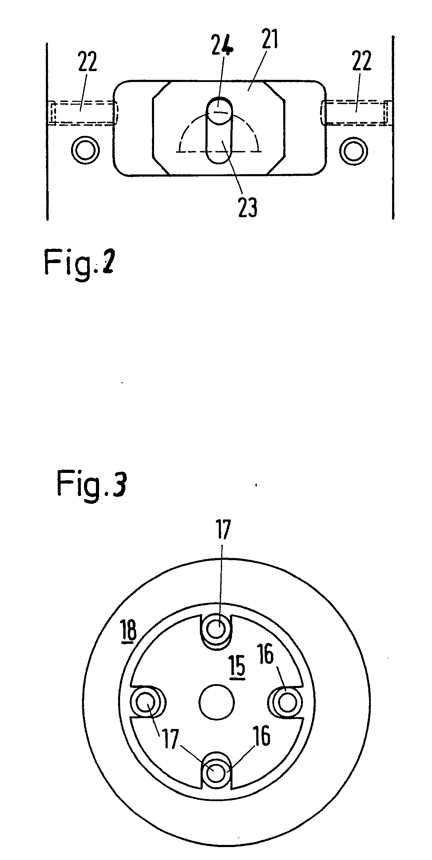

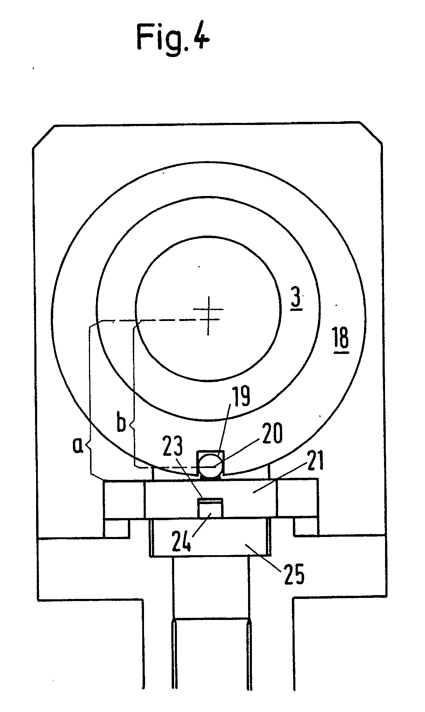

Wie in Fig. 4 dargestellt, befindet sich die Werkzeugaufnahme 3 außermittig im Exzenter 18. Dieser Exzenter 18 weist an seinem Außenumfang in Richtung des Spannschaftes 6 des Werkzeugkopfes eine parallel zu seiner Drehachse verlaufende Nut 19 auf, die einen etwas rechteckigen Querschnitt besitzt. In diese Nut 19 ragt eine etwa walzenförmige Nase 20 hinein, die mit dem auch in Fig. 3 dargestellten Schieber 21 fest verbunden ist. Wird nun dieser Schieber 21 in tangentialer Richtung zum Umfang des Exzenters 18 geradlinig um einen geringen Betrag verschoben, so daß die Nase 20 noch nicht aus der Nut 21 herausgleiten kann, so bewirkt dies eine Drehung des Exzenters 18 um einen begrenzten Winkelbetrag, und damit eine bogenförmige Bewegung der Werkzeugaufnahme 3 und damit des Werkzeuges, die auch Richtungskomponenten der dritten, auf den ersten und zweiten Richtungskomponenten von Längs- und Quersupport senkrecht stehenden Bewegungsrichtung enthält. Die Größe der Verschiebbarkeit des Schiebers 21 ist durch Anschlagstifte 22 in geringem Umfang veränderbar, wie es der jeweilige Außendurchmesser bzw. die Abnutzung des verwendeten Fräswerkzeuges 26 in Beziehung zur gewünschten Breite der zu fräsenden Nut verlangen. Die Längsverschiebung des Schiebers 21 wird dadurch erreicht, daß in ein senkrecht zur Bewegungsrichtung des Schiebers 21 und parallel zur Drehachse des Exzenters 18 verlaufendes Langloch 23 des Schiebers 21 ein Stift 24 hineinragt, der in axialer Richtung außermittig aus der Stirnseite des Bolzens 23 herausragt, welcher sich im hohlen Inneren des Spannschaftes 6 befindet. Bei einer Drehung des Bolzens 25 durchläuft infolgedessen der Stift 24 das Langloch von einem Endpunkt zum anderen Endpunkt und wieder zurück, wobei der Schieber 21 einen Verschiebeweg der doppelten Exzentrizität des Stiftes 24 im Bolzen 25 zurücklegt, sofern die Länge des Langloches 23 ausreichend bemessen ist. Auf diese Weise ergibt sich eine Drehbewegung des Exzenters 18,, die einen Versatz des Werkzeughalters 3 und damit des Werkzeuges in der dritten Bewegungsrichtung ergibt, die sich aus dem Verschiebeweg des Schiebers 21 unter Berücksichtigung des Übersetzungsverhältnisses (bestand des Schiebers 21 von der Mitte des Exzenters 18 zum bestand des Angriffspunktes der Nase 20 in der Nut 19 von der Mitte des Exzenters 18, in der Fig. 4 als a/b dargestellt) ergibt. Beträgt die doppelte Exzentrizität des Stiftes 24 im Bolzen 25 nicht wesentlich mehr als der angestrebte Verschiebeweg des Schiebers 21, so entsprechend die Extremstellungen des Schiebers 21 Winkellagen des Stiftes 24, die sich annähernd diametral gegenüberliegen bezüglich der Mitte des Bolzens 25. Aufgrund dessen hemmt sich der Schieber 21 in seinen Endpositionen selbst, da eine in Verschieberichtung des Schiebers 21 angreifende Kraft keine Drehung des Bolzens 25 bewirken kann, da in dieser Position des Schiebers 21 die erforderliche Bewegung des Stiftes 24 genau senkrecht zur Verschieberichtung des Schiebers 21 verläuft, wie aus der in Fig. 3 eingezeichneten Bahn des Stiftes 24 ersichtlich. Da sich der Bolzen 25 innerhalb des Schaftes 6 des Werkzeugkopfes befindet, kann auf diesem Wege der Drehung des Exzenters 18 maschinenseitig auch vom Inneren des Werkzeugrevolvers 14 aus betätigt werden, was eine automatische Verstellung des Werkzeuges in der dritten Bewegungsrichtung ermöglicht.

**Ansprüche**

1. Angetriebener Fräs-Werkzeugkopf für Drehmaschinen,
   – der mit einem Spannschaft (6) zur Aufnahme in eine Werkzeughalterung der Drehmaschine versehen ist, so daß der gesamte Fräs-Werkzeugkopf, in einer ersten und einer zweiten Richtung, die aufeinander senkrecht stehen, nämlich den Bewegungsrichtungen des Längs- und Quersupportes der Werkzeugmaschine, beweglich ist,
   – wobei durch ein Verdrehen eines eine Werkzeugaufnahme (3) tragenden Exzenters (18) das Fräswerkzeug (26) auch eine Bewegung vollziehen kann, die Richtungskomponenten einer dritten Richtung, die auf der ersten und der zweiten Richtung rechtwinklig steht, enthält, ohne daß der gesamte angetriebene Werkzeugkopf diese Bewegung mitmacht, dadurch **gekennzeichnet**, daß das Verdrehen des Exzenters (18) durch das tangentiale Verschieben einer in den Umfang des Exzenters (18) hineinragenden Nase (20) eines Schiebers geschieht, was durch das Verdrehen eines im Inneren des Spannschaftes (6) sitzenden Bolzens (25) bewirkt wird, aus dem außermittig ein Stift (24) vor- und in ein Langloch (23) des Schiebers (21) hineinragt, wobei die Längsachse dieses Langloches (23) rechtwinklig zur Verschieberichtung der Nase (20) und parallel zur Drehachse des Exzenters (18) verläuft.

2. Fräs-Werkzeugkopf nach Anspruch 1, dadurch **gekennzeichnet**, daß die Bewegung des Fräswerkzeuges (26) in der dritten Bewegungsrichtung begrenzt ist.

3. Fräs-Werkzeugkopf nach Anspruch 2, dadurch **gekennzeichnet**, daß nur die Mittelstellung und die Extremstellungen in der dritten Bewegungsrichtung des Fräswerkzeuges (26) justierbar sind.

4. Fräs-Werkzeugkopf nach Anspruch 3, dadurch **gekennzeichnet**, daß nur die Extremstellungen in der dritten Bewegungsrichtung des Fräswerkzeuges (26) durch einstellbare Anschlagstifte (22) justierbar sind.

5. Fräs-Werkzeugkopf nach einem der vorhergehenden Ansprüche, dadurch **gekennzeichnet**, daß die den Extremstellungen des Schiebers (21) und damit des Exzenters (18) entsprechenden Stellungen des Stiftes (24) sich bezüglich der Drehachse des Bolzens (25) annähernd diametral gegenüberliegen.

6. Fräs-Werkzeugkopf nach einem der vorhergehenden Ansprüche, dadurch **gekennzeichnet**, daß der Schieber (21) und/oder der Bolzen (25) über ihren ganzen Verstellbereich selbsthemmend ausgebildet sind.

**Claims**

1. Driven cutter head for rotary machines,
   – which is provided with a clamping shaft (6) for mounting in a tool holder of the rotary machine, so that the entire cutter head is movable in a first and in a second direction, which are perpendicular to each other, i.e. the direction of motion of the longitudinal support and cross slide rest of the machine tool,
   – while, by turning an eccentric (18) bearing a tool mount (3), the cutting tool (26) can also perform a movement which contains directional components of a third direction which is perpendicular to the first and second directions, without the participation of the complete driven tool head in this movement, characterized by the fact that the rotation of the eccentric (18) is effected by the tangential displacement of a lug (20) belonging to a slide and extending into the periphery of the eccentric (18), which is brought about by turning a bolt (25) which is situated in the interior of the clamping shaft (6) and from which a pin (24) extends eccentrically forwards and into a slot (23) of the slide (21), the longitudinal axis of the slot (23) taking its course at right angles to the direction of displacement of the lug (20) and parallel to the rotation axis of the eccentric (18).

2. Cutter head in accordance with Claim 1, characterized by the fact that the movement of the cutter head (26) is limited in the third direction of movement.

3. Cutter head in accordance with Claim 2, characterized by the fact that only the central position and the extreme positions can be adjusted in the third direction of movement of the cutter head (26).

4. Cutter head in accordance with Claim 3, characterised by the fact that only the extreme positions in the third direction of movement of the cutter head (26) can be adjustable by means of adjustable stop pins (22).

5. Cutter head in accordance with one of the foregoing claims, characterized by the fact that those positions of the pin (24) which correspond to the extreme positions of the slide (1) and thus of the eccentric (18) are approximately diametrical to one another in respect of the rotation axis of the bolt (25).

6. Cutter head in accordance with one of the foregoing claims, characterized by the fact that the slide (21) and/or the bolt (25) are constructed to be self-locking over their entire adjustment range.

## Revendications

1. Tête d'outil à fraiser entraînée pour tours,
– pourvue d'une tige de serrage (6) pour le montage dans un porte-outil du tour, de façon que l'ensemble de la tête d'outil à fraiser soit mobile dans une première et dans une deuxième direction, perpendiculaires entre elles, à savoir les directions de déplacement du support longitudinal et transversal de la machine-outil,
– l'outil à fraiser (26) pouvant également, au moyen d'une rotation d'un excentrique (18) portant un logement d'outil (3), effectuer un déplacement qui comprend les composantes directionnelles d'une troisième direction située perpendiculairement à la première et à la seconde direction, sans que l'ensemble de la tête d'outil entraînée effectue conjointement ce mouvement, caractérisée par le fait que la rotation de l'excentrique (18) s'effectue grâce au déplacement tangentiel d'un ergot (20), pénétrant dans la périphérie de l'excentrique (18), d'un curseur, ce qui est provoqué par la rotation d'un boulon (25) placé à l'intérieur de la tige de serrage (6), d'où une tige (24) fait saillie de façon excentrée et pénètre dans un trou allongé (23) du curseur (21), l'axe longitudinal de ce trou allongé (23) s'étendant perpendiculairement à la direction de déplacement de l'ergot (20) et parallement à l'axe de rotation de l'excentrique (18).

2. Tête d'outil à fraiser selon la revendication 1, caractérisée par le fait que le déplacement de l'outil à fraiser (26) est limité dans la troisième direction de déplacement.

3. Tête d'outil à fraiser selon la revendication 2, caractérisée par le fait que seule la position médiane et les positions extrêmes, dans la troisième direction de déplacement de l'outil à fraiser (26), sont ajustables.

4. Tête d'outil à fraiser selon la revendication 3, caractérisée par le fait que seule la position médiane et les positions extrêmes, dans la troisième direction de déplacement de l'outil à fraiser (26), sont ajustables au moyen de tiges de butée réglables (22).

5. Tête d'outil à fraiser selon l'une des revendications précédentes, caractérisée par le fait que les positions de la tige (24) qui correspondent aux positions extrêmes du curseur (21) et ainsi de l'excentrique (18) sont à peu près opposées diamétralement par rapport à l'axe de rotation du boulon (25).

6. Tête d'outil à fraiser selon l'une des revendications précédentes, caractérisée par le fait que le curseur (21) et/ou le boulon (25) sont de réalisation autobloquante irréversible sur la totalité de leur plage de réglage.

# Fig.1

Fig.2

Fig.3

# Fig.4